# EUROPEAN PATENT APPLICATION

(11) **EP 2 251 772 A1**
(43) Date of publication of application: **17.11.2010**
(21) Application number: 09716400.8
(22) Date of filing: 02.03.2009
(51) Int. Cl.: G06F 3/041, G06F 3/045

(54) **TOUCH PANEL**

(30) Priority: 03.03.2008 JP 2008052085
(71) Applicant: Hosiden Corporation, Yao-shi, Osaka 581-0071 (JP)
(72) Inventor: KATAKAMI, Seiki, Isesaki-shi Gunma 372-0825 (JP)
(74) Representative: MERH-IP Matias Erny Reichl Hoffmann
(86) International application number: PCT/JP2009/053847
(87) International publication number: WO 2009/110423

(57) **Abstract**

There is provided a touch panel in which the size of a connecting part between an electrode and an extraction pattern is reduced and the occurrence of Newton's rings is prevented. The touch panel comprises transparent conductive films formed on opposing surfaces of a pair of glass substrates to face each other, an extraction pattern 61 formed on the surface of one glass substrate with the transparent conductive film and having a connection part 61a, an electrode 51 provided on the transparent conductive film of the other glass substrate and having a connection part 51a that is not located in the same range as the connection part 61a of the extraction pattern 61 in an extending direction of the connection part 61a of the extraction pattern 61, and a conductive paste 32 connecting the end of the connection part 61a of the extraction pattern 61 and the end of the connection part 51a of the electrode 51. Convex parts 51b and 61b protruding in the extending direction are formed at the ends of the connection parts 51a and 61a, respectively.

## Description

### TECHNICAL FIELD

The present invention relates to a touch panel which is provided at the front of a display and is used as an input switch integrated with the display, and in particular, to a touch panel of the glass-glass type.

### BACKGROUND ART

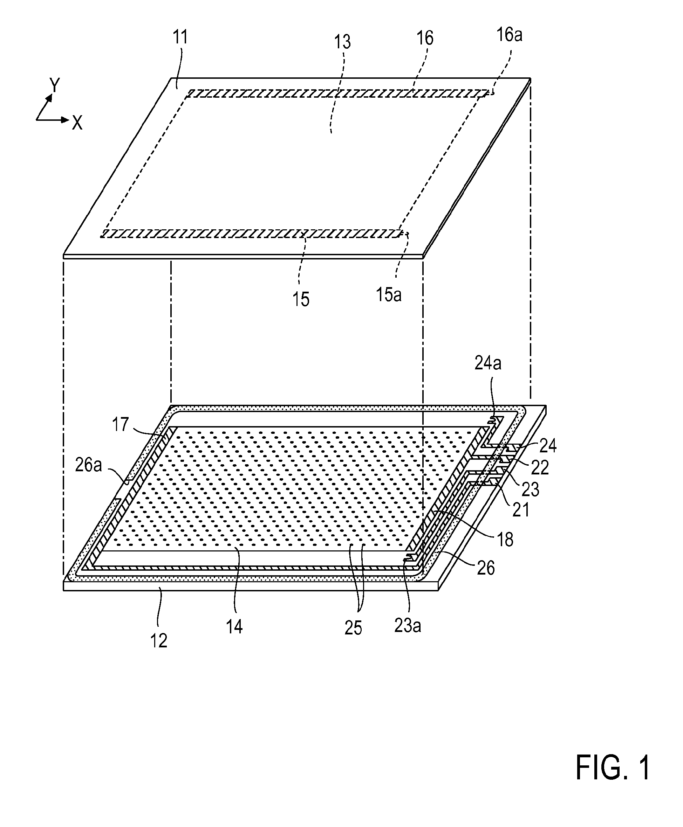

Fig. 1 shows the configuration of a glass-glass type touch panel of this kind (resistive film type touch panel) while separating the touch panel into an upper glass part and a lower glass part. The thickness of an upper glass substrate 11 is less than that of a lower glass substrate 12. On the opposing surfaces of the upper and lower glass substrates 11 and 12, transparent conductive film 13 and 14 are formed, respectively.

Each transparent conductive film 13, 14, serving as a resistive film, is implemented by an ITO film, for example. At both ends of the transparent conductive film 13, electrodes 15 and 16 are formed by application of conductive paste by printing (hereinafter referred to simply as "printing"). Similarly, electrodes 17 and 18 are formed at both ends of the transparent conductive film 14 by printing.

In this example, the electrodes 17 and 18 of the transparent conductive film 14 are placed at both ends of the transparent conductive film 14 in regard to the X direction. In contrast, the electrodes 15 and 16 of the transparent conductive film 13 are placed at both ends of the transparent conductive film 13 in regard to the Y direction. As shown in Fig. 1, the electrodes 15 and 16 are extended in the X direction to form connection parts 15a and 16a, respectively. Each connection part 15a and 16a is narrowed compared to the electrodes 15 and 16 and is formed in a protruding shape.

On the surface of the lower glass substrate 12 with the transparent conductive film 14, extraction patterns 21 - 24 to be used for applying and detecting voltage are formed by printing. The extraction patterns 21 and 22 are extracted from the electrodes 17 and 18, respectively. On the other hand, the extraction patterns 23 and 24 are formed to have connection parts 23a and 24a at their inner ends, respectively. The end of each connection part 23a and 24a is formed in a shape with a U-shaped notch.

The other ends (outer ends) of the extraction patterns 21 to 24 routed as shown in Fig. 1 are arranged in a line along one side of the lower glass substrate 12. To the outer ends of the extraction patterns 21 to 24, cables (e.g., FPC cables) for circuit connection (unshown) are connected. Incidentally, a lot of dot spacers 25 are formed in an array on the transparent conductive film 14 of the lower glass substrate 12.

The upper glass substrate 11 and the lower glass substrate 12 configured as above are joined together at their peripheries and integrated into one body by a seal 26 including spacers. In this state, the transparent conductive films 13 and 14 face each other.

The seal 26, which is made of a mixture of thermosetting resin (e.g., epoxy-based resin) and spacers, is applied and arranged on the lower glass substrate 12 as shown in Fig. 1. By overlaying the upper glass substrate 11 on the lower glass substrate 12 and then pressurizing and baking the stacked substrates, the upper and lower glass substrates 11 and 12 are joined together while keeping a prescribed gap between them.

Incidentally, a cut-out part 26a formed in the frame-shaped seal 26 is used after the upper and lower glass substrates 11 and 12 have been joined together, as an injecting hole for injecting air into the gap between the substrates for bulging up the central part of the upper glass substrate 11, that is, for increasing the gap. After the air injection, the cut-out part 26a is sealed up with resin.

In the above configuration with the upper and lower glass substrates 11 and 12 joined together, the narrowed connection parts 15a and 16a of the electrodes 15 and 16 fit in the U-shaped notches of the connection parts 23a and 24a, respectively, as will be explained later. In other words, the connection parts 23a and 15a are formed in such shapes as to couple with each other across a minute gap (ditto for the connection parts 24a and 16a).

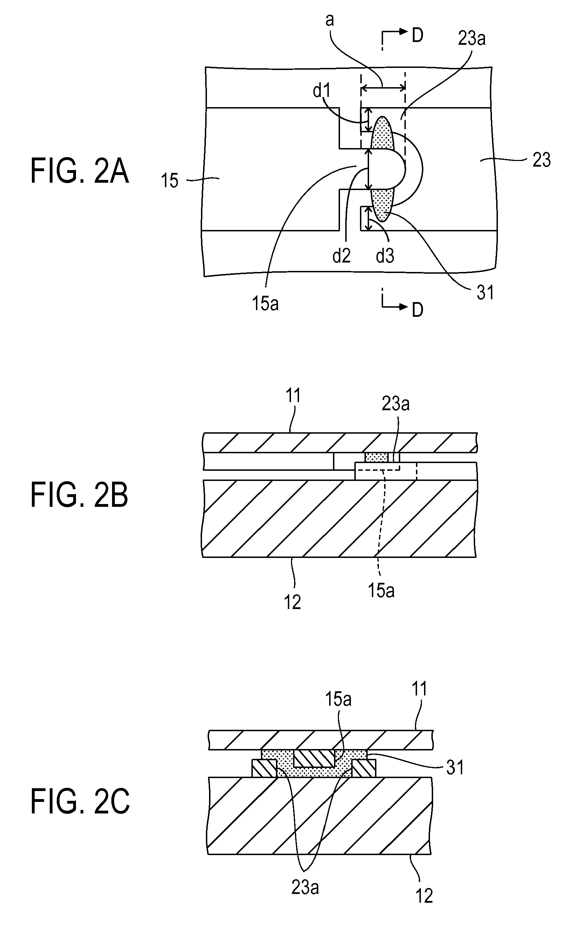

Fig. 2 shows the above situation by focusing on a connecting part where the connection parts 23a and 15a are connected together. The connection parts 23a and 15a formed in planer shapes coupling with each other across a minute gap are connected together via conductive paste 31. Specifically, the conductive paste 31 is printed on non-end portions (i.e., portions other than the ends) of the connection parts 15a and 23a.

The conductive paste 31 is printed on the non-end portions as above in order to achieve electrically stable connection between the connection part 23a and the conductive paste 31 and between the connection part 15a and the conductive paste 31, since there is a possibility that the printing has not been done stably at the ends of the connection parts 15a and 23a of the electrode 15 and the extraction pattern 23.

In the touch panel configured as above, when an arbitrary point on the panel is depressed, the transparent conductive films 13 and 14 make contact with each other at the depressed point. The X coordinate of the point can be figured out by applying voltage between both ends of the transparent conductive film 14 and detecting the voltage through the transparent conductive film 13. Similarly, the Y coordinate of the point can be figured out by applying voltage between both ends of the transparent conductive film 13 and detecting the voltage through the transparent conductive film 14. The (X, Y) coordinates of the depressed point can be detected as above.
Patent Literature 1: Japanese Patent Application Laid Open No. 2003-323260

### DISCLOSURE OF THE INVENTION

### PROBLEMS TO BE SOLVED BY THE INVENTION

In the touch panel having the above configuration, the electrodes and the extraction patterns are formed by printing and baking of conductive paste such as silver paste. The minimum width necessary for stable printing of the electrode or extraction pattern (hereinafter referred to as a "minimum print width") is approximately 0.5 mm at present and it is widely known that the stable printing can become impossible when the width of the electrode/pattern is less than the minimum print width. The printing in a width less than the minimum print width can result in faintness or patchiness of the electrode/pattern.

Thus, in order to realize stable printing of the electrodes and the extraction patterns, the widths d1 and d3 (see Fig. 2A) of the edge parts at both edges in regard to the width direction of the connection part 23a of the extraction pattern 23 and the width d2 of the connection part 15a of the electrode 15 are all set wider than the minimum print width. Consequently, the widths of the connection parts 23a and 15a of the extraction pattern 23 and the electrode 15 are necessitated to be three times the minimum print width or wider.

The primary object of the present invention, which has been made in consideration of the above situation, is to provide a touch panel in which the widths of the connection parts of the extraction pattern and the electrode can be reduced compared to conventional touch panels.

### MEANS TO SOLVE THE PROBLEMS

A touch panel according to the present invention comprises:
transparent conductive films formed on opposing surfaces of a pair of glass substrates to face each other;
an extraction pattern formed on the surface of one glass substrate with the transparent conductive film and having a connection part;
an electrode provided on the transparent conductive film of the other glass substrate and having a connection part that is not located in the same range as the connection part of the extraction pattern in an extending direction of the connection part of the extraction pattern; and
a conductive paste connecting the end of the connection part of the extraction pattern and the end of the connection part of the electrode.

### EFFECTS OF THE INVENTION

By preventing the connection parts of the extraction pattern and the electrode from being located in the same range in their extending direction, the widths of the connecting parts of the extraction pattern and the electrode can be reduced compared to conventional touch panels.

### BRIEF DESCRIPTION OF THE DRAWINGS

Fig. 1 is an exploded perspective view showing the general configuration of a conventional touch panel;
Fig. 2A is a (transparent) plan view of a connecting part in the conventional touch panel;
Fig. 2B is a side view of the connecting part;
Fig. 2C is a cross-sectional view of the connecting part taken along the line D - D shown in Fig. 2A;
Fig. 3 is an exploded perspective view showing the general configuration of a touch panel in accordance with a first embodiment;
Fig. 4A is a (transparent) plan view of a connecting part in accordance with the first embodiment;
Fig. 4B is a side view of the connecting part;
Fig. 4C is a cross-sectional view of the connecting part taken along the line D - D shown in Fig. 4A;
Fig. 5A is a (transparent) plan view of a connecting part in accordance with a second embodiment;
Fig. 5B is a side view of the connecting part;
Fig. 5C is a cross-sectional view of the connecting part taken along the line D - D shown in Fig. 5A;
Fig. 6A is a (transparent) plan view of a connecting part as a modification;
Fig. 6B is a side view of the connecting part;
Fig. 6C is a cross-sectional view of the connecting part taken along the line D - D shown in Fig. 6A;
Fig. 7A is a (transparent) plan view of a connecting part as another modification;
Fig. 7B is a side view of the connecting part;
Fig. 7C is a cross-sectional view of the connecting part taken along the line D - D shown in Fig. 7A;
Fig. 8A is a (transparent) plan view of a connecting part in accordance with another embodiment;
Fig. 8B is a side view of the connecting part; and
Fig. 8C is a cross-sectional view of the connecting part taken along the line D - D shown in Fig. 8A.

### BEST MODES FOR CARRYING OUT THE INVENTION

Referring now to the drawings, a description will be given in detail of an example of embodiments in accordance with the present invention. In the following description and figures, components equivalent to those in Figs. 1 and 2 are assigned the same reference characters as those in Figs. 1 and 2 and detailed explanation thereof is omitted for brevity.

### [First Embodiment]

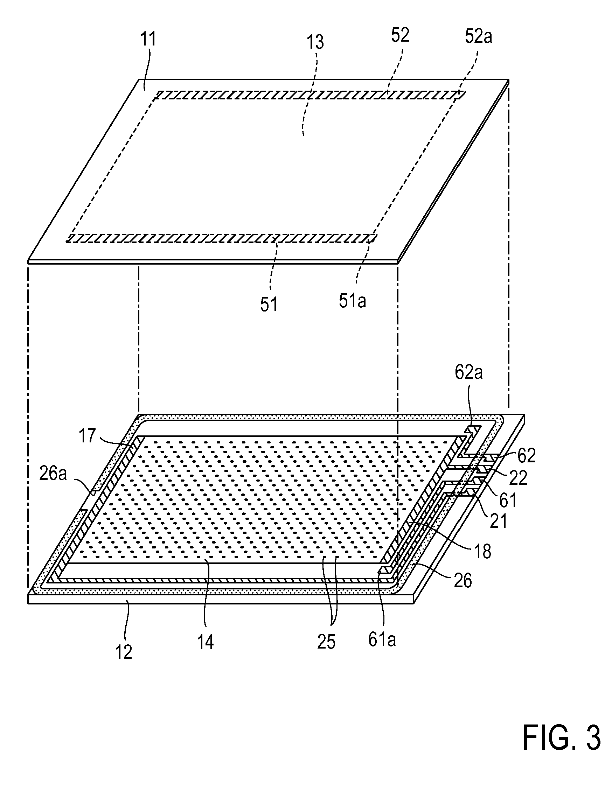

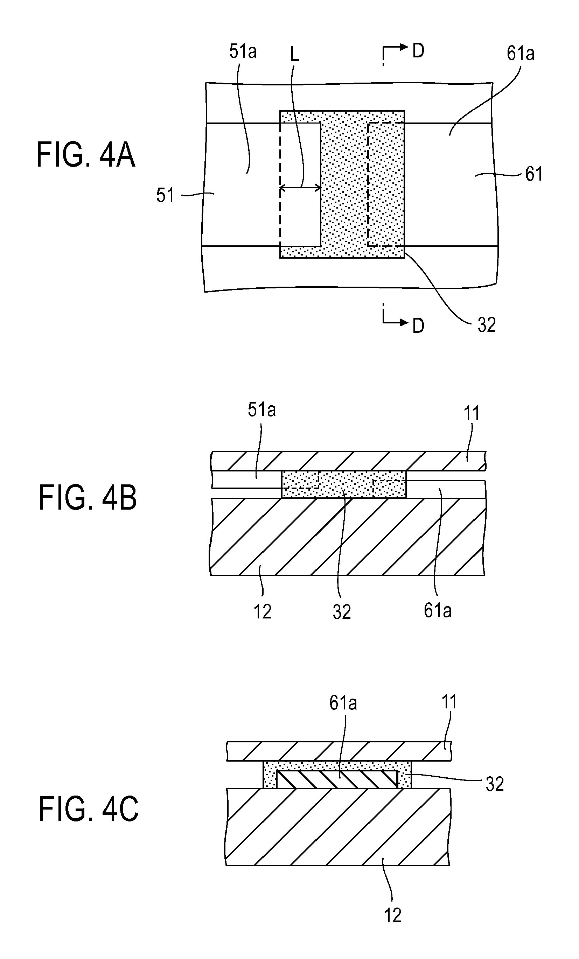

An example of a first embodiment of the present invention is shown in Figs. 3 and 4. Electrodes 51 and 52 are provided on the transparent conductive film 13 of the upper glass substrate 11 similarly to the electrodes 15 and 16 of the touch panel described in Patent Literature 1. Meanwhile, extraction patterns 61 and 62 are formed on the lower glass substrate 12 similarly to the extraction patterns 23 and 24 of the touch panel described in Patent Literature 1.

In this example, end faces of connection parts 51a and 52a of the electrodes 51 and 52 in their extending direction are orthogonal to the extending direction. Similarly, end faces of connection parts 61a and 62a of the extraction patterns 61 and 62 in their extending direction are orthogonal to the extending direction. The widths of the electrodes 51 and 52 and the extraction patterns 61 and 62 are set at the minimum print width, for example. Thus, the widths of the connection parts 51a and 52a of the electrodes 51 and 52 and the connection parts 61a and 62a of the extraction patterns 61 and 62 are also set at the minimum print width, for example.

As shown in Fig. 4, the connection parts 51a and 61a are configured so as not to be located in the same range in the extending direction of the connection parts 51a and 61a in the state in which the upper and lower glass substrates 11 and 12 have been joined together. Similarly, the connection parts 52a and 62a are configured so as not to be located in the same range in the extending direction of the connection parts 52a and 62a in the state in which the upper and lower glass substrates 11 and 12 have been joined together. Fig. 4A is a plan view of a connecting part where the connection parts 51a and 61a are connected together. Fig. 4B is a side view of the connecting part. Fig. 4C is a cross-sectional view of the connecting part taken along the line D - D shown in Fig. 4A. Another connecting part where the connection parts 52a and 62a are connected together is also configured similarly.

Here, "two connection parts are not located in the same range in the extending direction" means that the two connection parts do not intrude into each other, that is, two images obtained by projecting the two connection parts in their width direction do not overlap with each other. For example, in the touch panel described in Patent Literature 1 (see Fig. 2A), the images obtained by projecting the connection parts 15a and 23a in the width direction overlap with each other in the range a. In contrast, in the present invention, the images obtained by projecting the connection parts 51a and 61a in the width direction do not overlap with each other. Similarly, the images obtained by projecting the connection parts 52a and 62a in the width direction do not overlap with each other.

By printing conductive paste 32 (by screen printing, etc.) so that the conductive paste 32 contacts the ends of the connection parts 51a and 52a and the ends of the connection parts 61a and 62a, the electrodes 51 and 52 and the extraction patterns 61 and 62 are electrically connected together, respectively.

For electrically stable connection of the connection parts, it has been considered (as shown in Fig. 2, for example) that not the ends of the connection parts 15a and 23a but non-end portions (i.e., portions other than the ends) of the connection parts 15a and 23a have to contact the conductive paste 31 since there is a possibility that the printing has not been done stably at the ends of the connection parts of the electrode and the extraction pattern.

However, it is not absolutely necessary to make the connection part 15a intrude into the U-shaped notch of the connection part 23a and connect the non-end portions of the connection parts 15a and 23a to the conductive paste 31 as in the touch panel described in Patent Literature 1. The present inventor found out that electrical conductivity necessary for configuring a touch panel can be achieved sufficiently as long as the ends of the connection parts 51a and 52a and the other connection parts 61a and 62a, which are not located in the same range in the extending direction, are in contact with the conductive paste 32.

By preventing the connection parts 51a and 52a and the other connection parts 61a and 62a from being located in the same range in their extending direction (as in the touch panel of this example), the size of the connecting part of the electrodes 51 and 52 and the extraction patterns 61 and 62 can be reduced. Concretely, the widths of the connection parts 51a, 52a, 61a and 62a can be set at the minimum print width, for example. Further, by the reduction of the widths of the connection parts, the possibility of occurrence of Newton's rings or breakage of glass can be reduced compared to the conventional configuration. Moreover, variation in the operating load can be eliminated.

The length L (see Fig. 4) of a contacting part, where the connection parts 51a, 52a, 61a, 62a contact the conductive paste 32, in the extending direction is sufficient if L is not less than 12 µm twice the particle diameter (6 µm) of the conductor particles (silver particles). Taking print misalignment and strain misalignment into consideration, setting the length L at 0.2 mm or longer is sufficient (ditto for other embodiments described below).

### [Second Embodiment]

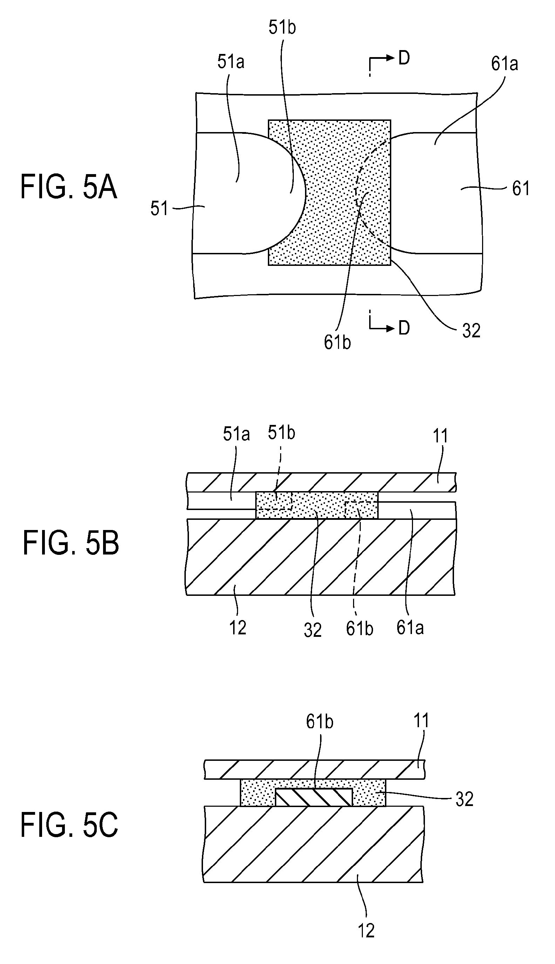

Fig. 5 shows an example of the connecting part for the connection parts 51a and 61a in accordance with a second embodiment of the present invention. The other connecting part for the connection parts 52a and 62a is also configured similarly. In this example, a convex part 51b in a substantially semicircular shape is formed at the end of the connection part 51a of the electrode 51. Similarly, a convex part 61b in a substantially semicircular shape is formed at the end of the connection part 61a of the extraction pattern 61.

By printing the conductive paste 32 so that the conductive paste 32 contacts the convex part 51b of the electrode 51 and the convex part 61b of the extraction pattern 61, the electrode 51 and the extraction pattern 61 are electrically connected together via the conductive paste 32.

If the areas of the parts where the connection parts 51a, 52a, 61a and 62a and the conductive paste 32 overlap with each other (i.e., connecting parts) are large, the conductive paste 32 is not squashed sufficiently when the upper and lower glass substrates 11 and 12 are joined together and that can lead to a warp of the upper glass substrate 11 and occurrence of Newton's rings. However, by reducing the areas of the parts where the connection parts 51a, 52a, 61a and 62a and the conductive paste 32 overlap with each other (i.e., connecting parts) by letting the convex parts 51b, 52b, 61b and 62b at the ends of the connection parts 51a, 52a, 61a and 62a contact the conductive paste 32 as in this example, the warp of the upper glass substrate 11 which can occur when the upper and lower glass substrates 11 and 12 are joined together can be reduced. Here, the "part where the connection parts 51a, 52a, 61a and 62a and the conductive paste 32 overlap with each other" means the overlapping parts of the connection parts 51a, 52a, 61a and 62a and the conductive paste 32 (i.e., connecting parts) when viewed in the direction orthogonal to the sheet of Figs. 4A, 5A, 6A or 7A.

Thus, in the second embodiment, the possibility of occurrence of Newton's rings or breakage of glass can be reduced, and the variation in the operating load can be eliminated more efficiently.

As above, it is unnecessary to make the full width of each of the connection parts 51a, 52a, 61a and 62a contact the conductive paste 32.

There is a possibility that the printing has not been done stably at the ends of the connection parts 51a, 52a, 61a and 62a of the electrodes 51 and 52 and the extraction patterns 61 and 62. Further, when the widths of the connection parts 51a, 52a, 61a and 62a are set at the minimum print width, the widths of the convex parts 51b, 52b, 61b and 62b are necessitated to be less than the minimum print width and the convex parts can become faint or patchy due to unstable printing. However, electrical conductivity necessary for configuring a touch panel can be achieved sufficiently by making the conductive paste 32 contact the convex part 51b of the electrode 51 and the convex part 61b of the extraction pattern 61.

Incidentally, it is of course possible to set the widths of the connection parts 51a, 52a, 61a and 62a wider than the minimum print width and also set the widths of the convex parts 51b, 52b, 61b and 62b wider than the minimum print width.

### [Modification]

Effects similar to those of the second embodiment can be achieved by various types of convex parts 51b, 52b, 61b and 62b formed at the ends of the connection parts 51a, 52a, 61a and 62a as long as the convex parts have a shape protruding in the extending direction of the connection parts 51a, 52a, 61a and 62a.

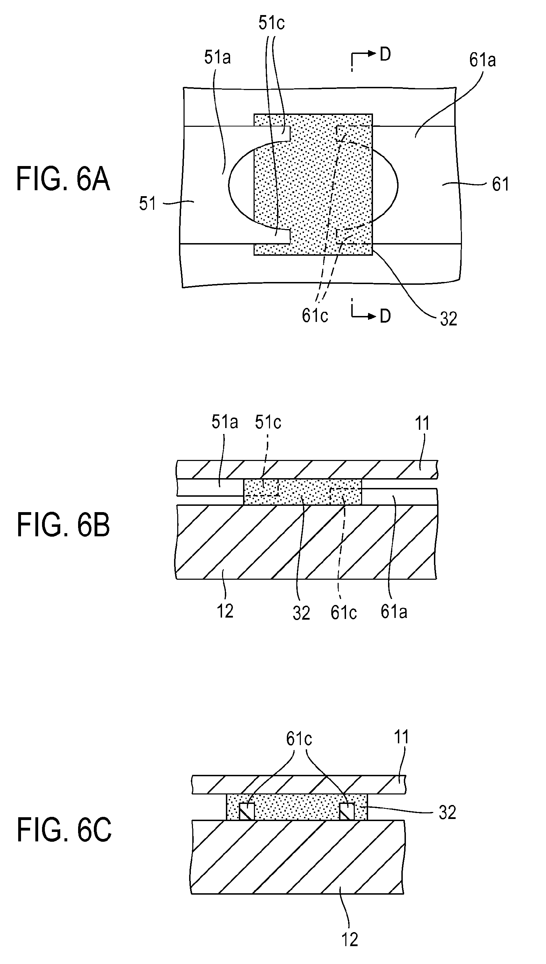

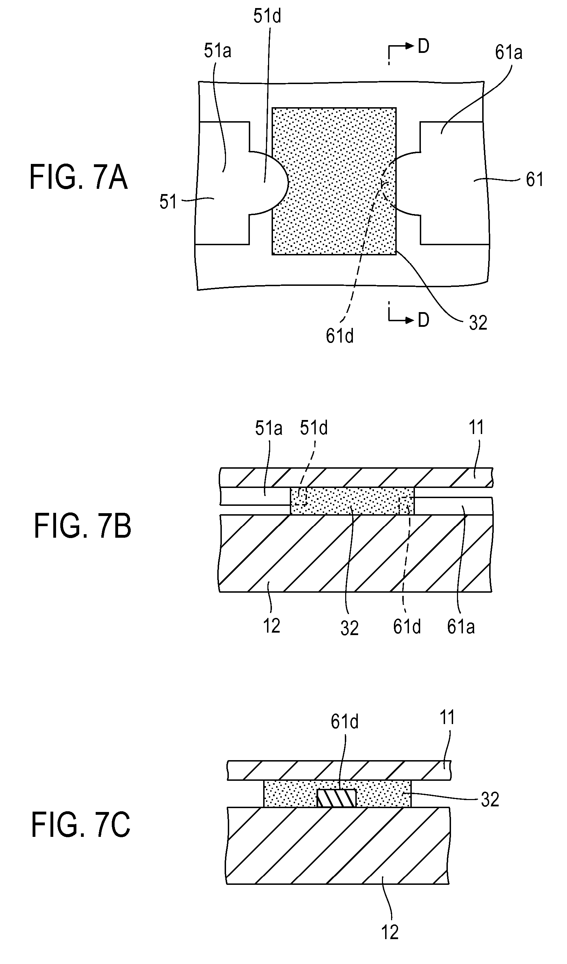

For example, it is possible to provide U-shaped notches at the ends of connection parts 51a and 61a and thereby form two convex parts 51c and 61c protruding in the extending direction of the connection parts 51a and 61a from both edges of the connection parts 51a and 61a in regard to its width direction as shown in Fig. 6. It is also possible to form a convex part 51d, 61d protruding in the extending direction from the center of each of the connection parts 51a and 61a in regard to its width direction as shown in Fig. 7. The other connection parts 52a and 62a are also formed in similar shapes. By forming the convex part of connection parts 51a, 52a, 61a and 62a in the shape shown in Fig. 6 or Fig. 7, the size of the parts where the connection parts 51a, 52a, 61a and 62a and the conductive paste 32 overlap with each other can be reduced further.

While there are four parts where the conductive paste 32 contacts connection parts 51a, 52a, 61a and 62a in the touch panels described above, it is possible to form at least one of the connection parts in the above shape for the contact with the conductive paste 32. Further, the shape of the connection parts 51a and 52a of the electrodes 51 and 52 and that of the connection parts 61a and 62a of the extraction patterns 61 and 62 may differ from each other.

Incidentally, the connection between the connection parts 51a and 52a of the electrodes 51 and 52 and the connection parts 61a and 62a of the extraction patterns 61 and 62 can be achieved more desirably and stably by retaining the transparent conductive films 13 and 14 and forming lands from the transparent conductive films 13 and 14 at positions corresponding to the connection parts 51a, 52a, 61a and 62a in the formation of the transparent conductive films 13 and 14 and thereafter having the connection parts 51a, 52a, 61a and 62a located on the lands.

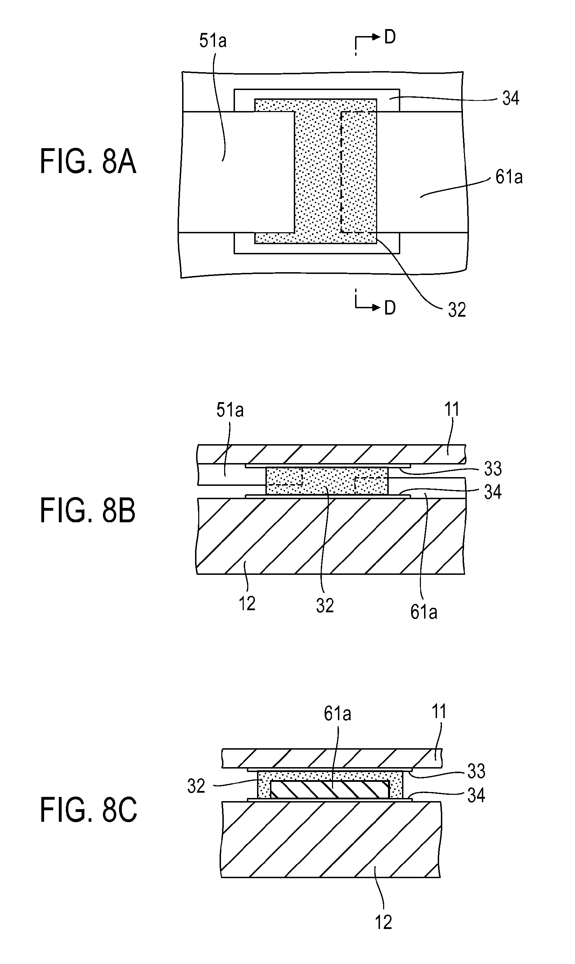

Fig. 8 shows such a state of the touch panel with the lands formed from the transparent conductive films 13 and 14 by focusing on the connecting part for the connection parts 51a and 61a. In Fig. 8, the reference numerals "33" and "34" denote the lands.

## Claims

1. A touch panel comprising:
transparent conductive films formed on opposing surfaces of a pair of glass substrates to face each other;
an extraction pattern formed on the surface of one glass substrate with the transparent conductive film and having a connection part;
an electrode provided on the transparent conductive film of the other glass substrate and having a connection part that is not located in the same range as the connection part of the extraction pattern in an extending direction of the connection part of the extraction pattern; and
a conductive paste connecting the end of the connection part of the extraction pattern and the end of the connection part of the electrode.

2. The touch panel according to claim 1, wherein:
a convex part protruding in the extending direction of the connection part is formed at the end of the connection part of at least either the extraction pattern or the electrode; and
the convex part contacts the conductive paste.

3. The touch panel according to claim 2, wherein the convex part is in a substantially semicircular shape.

4. The touch panel according to claim 2, wherein the convex part includes two convex parts protruding from both edges of the connection part of the extraction pattern or the electrode in regard to a width direction of the connection part.

5. The touch panel according to claim 2, wherein the convex part protrudes from the center of the connection part of the extraction pattern or the electrode in regard to a width direction of the connection part.

6. The touch panel according to any one of claims 1 to 5, further comprising lands formed from the transparent conductive films on the opposing surfaces of the pair of glass substrates,
wherein the connection part of the extraction pattern and the connection part of the electrode are placed on the lands, respectively.

## Amended claims

### Amended claims under Art. 19.1 PCT

**1.** (Amended) A touch panel comprising:
transparent conductive films formed on opposing surfaces of a pair of glass substrates to face each other;
an extraction pattern formed on the surface of one glass substrate with the transparent condutive film and having a connection part;
an electrode provided on the transparent conductive film of the other glass substrate and having a connection part that is not located in the same range as the connection part of the extraction pattern in an extending direction of the connection part of the extraction pattern; and
a conductive paste connecting the end of the connection part of the extraction pattern and the end of the connection part of the electrode,
wherein:
a convex part protruding in the extending direction of the connection part is formed at the end of the connection part of at least either the extraction pattern or the electrode; and
the convex part contacts the conductive paste.

**2.** (Deleted)

**3.** (Amended) The touch panel according to claim 1, wherein the convex part is in a substantially semicircular shape.

**4.** (Amended) The touch panel according to claim 1, wherein the convex part includes two convex parts protruding from both edges of the connection part of the extraction pattern or the electrode in regard to a width direction of the connection part.

**5.** (Amended) The touch panel according to claim 1, wherein the convex part protrudes from the center of the connection part of the extraction pattern or the electrode in regard to a width direction of the connection part.

**6.** (Amended) The touch panel according to any one of claims 1, 3, 4 and 5, further comprising lands formed from the transparent conductive films on the opposing surfaces of the pair of glass substrates,
wherein the connection part of the extraction pattern and the connection part of the electrode are placed on the lands, respectively.

Statement under Art. 19.1 PCT
New claim 1 is made by integrating claim 2 into claim 1. Accordingly, claim 2 is deleted.

Claims 3 to 5 are made dependent on claim 1. Claim 6 is made dependent on claims 1, 3, 4 and 5.
